# DEMANDE DE BREVET EUROPEEN

(11) **EP 4 741 808 A1**
(43) Date de publication de la demande: **13.05.2026**
(21) Numéro de dépôt: 24212465.9
(22) Date de dépôt: 12.11.2024
(51) Int. Cl.: G01N 21/88, G06V 10/94

(54) **OUTIL DE PRISE D'IMAGE POUR DÉTECTION DE DÉFAUT ESTHÉTIQUE**

(71) Demandeur: Richemont International S.A., 1752 Villars-sur-Glâne (CH)
(72) Inventeur: BLANC, Sébastien, 1007 Lausanne (CH); BONZON, Noémie, 1009 Pully (CH); CANTALE, Nicolas, 1124 Gollion (CH); PAD, Pedram, 1010 Lausanne (CH); HAZHAZ, Ihssan, 25300 Pontarlier (CH); SALEMBIEN, Tom, 25300 Pontalier (FR); TODA MAS, Aleix, 2108 Couvet (CH)
(74) Mandataire: Novagraaf International SA

(57) **Abrégé**

L'invention concerne un dispositif de prise d'image 1 de composant horloger ou joaillier 90 pour identifier des défauts comme des rayures, comprenant un bâti sur lequel est placé le composant 90, au moins un cercle de LED directives 20 contrôlables orientées vers le composant 90, une caméra 10 pour la prise d'image, les parois internes du bâti comprenant une multitude de LED diffuses contrôlables 70.

## Description

La présente invention concerne de manière générale le domaine de l'horlogerie, plus particulièrement le domaine de l'inspection de composants horlogers, comme par exemple les cadrans de montre, ainsi que le domaine de la joaillerie.

Les dispositifs de prise d'image d'un composant horloger sont connus dans l'art antérieur.

Toutefois, il est désirable d'améliorer les performances et les capacités de ces dispositifs, notamment dans un but de contrôle qualité ou d'amélioration de l'esthétique des composants horlogers ou joailliers.

La présente invention a ainsi pour but de proposer un dispositif de prise d'image(s) permettant d'identifier un éventuel défaut sur un composant horloger ou joaillier.

Dans un premier aspect, l'invention concerne un dispositif de prise d'image d'un composant horloger ou joaillier pour identifier un éventuel défaut du composant horloger ou joaillier, comprenant :
- un appareil de prise d'image, tel qu'une caméra, définissant un axe optique principal de prise d'image du composant horloger ou joaillier,
- une source d'illumination primaire avec :
- au moins un premier élément lumineux primaire définissant un premier angle d'inclinaison primaire par rapport à l'axe optique principal et un premier angle de rayonnement primaire, et
- au moins une source d'illumination secondaire avec :
- une pluralité d'éléments lumineux secondaires définissant au moins un angle principal d'inclinaison secondaire par rapport à l'axe principal de prise d'image et au moins un angle de rayonnement secondaire,
   dans lequel l'au moins un angle principal d'inclinaison secondaire est différent du premier angle d'inclinaison primaire, et dans lequel l'au moins un angle de rayonnement secondaire est plus grand que le premier angle de rayonnement primaire,
- une unité de commande agencée pour commander l'au moins un premier élément lumineux primaire et/ou la pluralité d'éléments lumineux secondaires, de sorte à modifier au moins partiellement une ombre et/ou une lumière réfléchie du composant horloger ou joaillier afin de permettre d'identifier l'éventuel défaut du composant horloger ou joaillier.

Ceci permet de proposer un dispositif de prise d'image avec une amélioration des performances et des capacités, notamment dans un but de contrôle qualité ou d'amélioration de l'esthétique des composants horlogers ou joailliers. Un avantage important de l'invention est la capacité de contrôle de l'angle, de la puissance et de la surface de l'éclairage plus précis que les dispositifs de l'art antérieur. Ceci permet, de révéler les défauts notamment avec un contraste positif (i.e. blanc sur fond noir) ou avec contraste négatif (i.e. noir sur fond blanc). De plus, la caméra à haute résolution permet aussi de repérer des anomalies de taille vraiment réduite.

Par exemple, il est possible d'utiliser une caméra ou un capteur optique avec une résolution de préférence de 10 Méga pixels ou plus. Toutefois, une caméra ou un capteur optique avec une résolution moindre peut fonctionner. Ainsi, notamment pour le contrôle absence / présence et les défauts esthétiques grossiers, le minimum de résolution est de préférence à partir de 1 Méga pixels. Le contrôle esthétique est de préférence possible à partir d'une résolution de la caméra de 5 Méga pixels.

On entend par ombre une zone plus ou moins sombre créée par un corps opaque qui intercepte les rayons lumineux, une ombre partielle.

On entend par angle de rayonnement ou angle d'émission un angle qui indique la largeur de la répartition de la lumière. Si l'angle est grand, le cône de lumière est large et l'intensité lumineuse sur la surface d'impact est plus faible, car la lumière est moins concentrée. En revanche, si l'angle d'émission est petit, le cône de lumière est étroit et l'intensité lumineuse est proportionnellement plus grande. La lumière est finalement concentrée sur une surface plus petite.

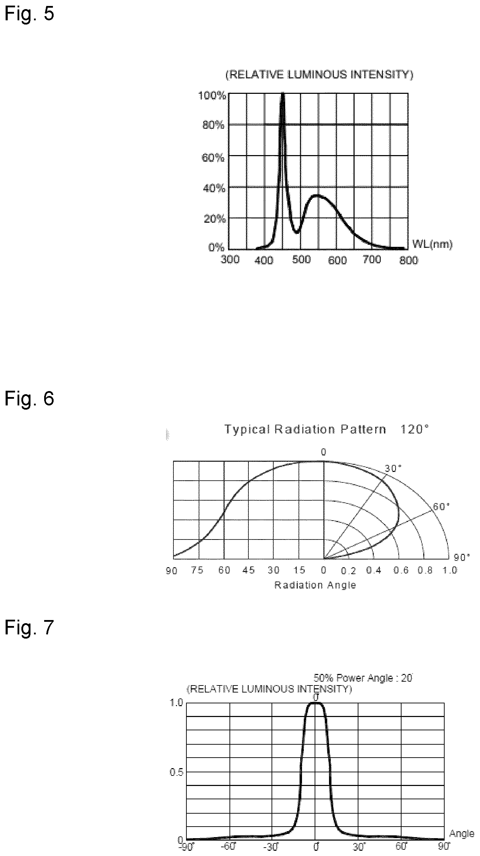

En d'autres termes, l'invention concerne un dispositif de prise d'images pour identifier un défaut d'un composant horloger, comprenant
- un élément de prise d'images, tel qu'une caméra, définissant un axe principal de prise d'image du composant horloger,
- un panneau d'illumination directive avec une première pluralité d'éléments lumineux directifs définissant un premier angle d'illumination directive par rapport à l'axe principal de prise d'image, et une deuxième pluralité d'éléments lumineux directifs définissant un deuxième angle d'illumination directive par rapport à l'axe principal de prise d'image, le premier angle d'illumination directive étant différent du deuxième angle d'illumination directive,
- au moins un panneau d'illumination diffusive avec une pluralité d'éléments lumineux diffusifs définissant un angle principale d'illumination diffusive par rapport à l'axe principal de prise d'image, différent du premier angle d'illumination directive et du deuxième angle d'illumination directive. Notons que, de préférence, une source diffusive présente une distribution spatiale d'émission sur tout un hémisphère, par opposition aux sources directives, qui produisent un cône de lumière concentrant l'émission sous un angle bien délimité. Le profil spatial d'émission d'une source diffusive peut être reconnu par sa distribution d'émission lambertienne (ou similaire), comme dans l'exemple de la figure 7.

Dans un exemple de réalisation, l'invention concerne un dispositif de prise d'image de composant horloger pour identifier des défauts comme des rayures, comprenant un bâti sur lequel est placé le composant, au moins un cercle de LED directives contrôlables orientées vers le composant, une caméra pour la prise d'image, les parois internes du bâti comprenant une multitude de LED diffuses contrôlables.

L'invention peut aussi être définie selon les caractéristiques suivantes, prises individuellement ou en combinaison.

Avantageusement, le dispositif de prise d'image(s) comprend en outre :
- au moins un deuxième élément lumineux primaire définissant un deuxième angle d'inclinaison primaire par rapport à l'axe optique principal et un deuxième angle de rayonnement primaire, et
dans lequel le premier angle d'inclinaison primaire est inférieur au deuxième angle d'inclinaison primaire d'une première valeur prédéterminée.

Avantageusement, l'au moins un angle principal d'inclinaison secondaire est différent du deuxième angle d'inclinaison primaire.

Avantageusement, l'au moins un angle de rayonnement secondaire est plus grand que le deuxième angle de rayonnement primaire.

Avantageusement, l'unité de commande est agencée pour commander l'au moins un deuxième élément lumineux primaire.

Avantageusement, l'unité de commande est agencée pour commander une intensité lumineuse de l'au moins un premier élément lumineux primaire, l'au moins un deuxième élément lumineux primaire et/ou la pluralité d'éléments lumineux secondaires.

Ceci permet de mieux détecter un éventuel défaut, notamment en plaçant l'intensité dans une gamme améliorant la détection du défaut. La flexibilité de contrôle indépendant sur un grand nombre de LED (par exemple 1332 LED, ou plus de 1300 LED), d'un mode de réalisation de l'invention décrit ci-après de façon plus détaillée, permet, pour chaque image prise avec une configuration d'éclairages déterminé, de mettre en évidence tout défaut existant sur la région d'intérêt (ROI), qui peut être tout l'ensemble de la pièce à inspecter ou seulement une partie. La flexibilité de contrôle d'intensité sur 100 niveaux différents dans un mode de réalisation de l'invention permet d'ajuster les lumens émis par chaque LED ou groupe de LED de manière à ce que la dynamique de l'image soit optimale. C'est à dire, qu'il est possible d'arriver à éviter des zones saturées et des zones trop sombres dans la région d'intérêt (ROI). Un autre exemple de réalisation avec un grand nombre de LED concerne quatre panneaux latéraux avec 252 LED chacun, un panneau supérieur avec 312 LED, et 48 LED directives, pour un total de 1368 LED, dont 1320 derrière, ou au niveau de, les panneaux diffusifs.

Avantageusement, l'unité de commande est agencée pour commander une inclinaison de l'au moins un premier élément lumineux primaire, de l'au moins un deuxième élément lumineux primaire et/ou de la pluralité d'éléments lumineux secondaires.

Avantageusement, il est possible de sélectionner un ou plusieurs éléments parmi l'au moins un premier élément lumineux primaire, l'au moins un deuxième élément lumineux primaire et/ou la pluralité d'éléments lumineux secondaires, et l'unité de commande est agencée pour commander l'inclinaison de cet élément sélectionné ou de ces éléments sélectionnés. Il est en outre possible de régler l'intensité d'éclairage de chaque élément sélectionné.

Ceci permet de mieux détecter un éventuel défaut, notamment en plaçant l'inclinaison dans une gamme améliorant la détection du défaut. Notons qu'il est en outre possible de régler l'inclinaison moyenne de l'éclairage sur la pièce en ajustant l'intensité d'une ou des différentes sources.

Avantageusement, l'unité de commande est agencée pour commander une valeur du premier angle de rayonnement primaire, du deuxième angle de rayonnement primaire et/ou de l'angle de rayonnement secondaire.

Ceci permet de mieux détecter un éventuel défaut, notamment en plaçant l'angle de rayonnement dans une gamme améliorant la détection du défaut. Notons qu'il est possible de régler la valeur en arrêt (ON), éteint (OFF) ou avec une valeur intermédiaire réglable, continue ou par saut.

Avantageusement, l'unité de commande est agencée pour commander une séquence d'illumination de l'au moins un premier élément lumineux primaire, et/ou de l'au moins un deuxième élément lumineux primaire et/ou de la pluralité d'éléments lumineux secondaires et/ou d'un ou plusieurs éléments lumineux de la pluralité d'éléments lumineux secondaires. Il est ainsi possible de piloter les éléments lumineux avec des séquences d'illuminations (en plus de leur fréquence spécifique d'éclairage, notamment longueur d'onde) avec infinité de combinations possibles sur les séquences. En d'autres termes, il peut s'agir par exemple d'éteindre et d'allumer les éléments lumineux afin d'ajouter une séquence ou un hachage de l'éclairage, de sorte à prendre une pluralité d'image avec ou sans effet stroboscopique. Par exemple, il est possible de choisir une combinaison d'éclairage des éléments lumineux, puis de prendre une image, puis de changer la combinaison d'éclairage puis de reprendre une image, etc. En d'autres termes, la séquence d'illumination peut être une répétition d'une lumière pulsée.

Ceci permet de mieux détecter un éventuel défaut, notamment en plaçant la fréquence d'illumination dans une gamme améliorant la détection du défaut.

Avantageusement, la source d'illumination primaire comprend :
- une pluralité de premiers éléments lumineux primaires, de préférence agencés circulairement, et/ou
- une pluralité de deuxièmes éléments lumineux primaires, de préférence agencés circulairement.

Ceci permet de mieux détecter un éventuel défaut, notamment en plaçant, en positionnant, en allumant ou en activant, une pluralité d'éléments lumineux pour améliorer la détection du défaut.

Avantageusement, l'unité de commande est agencée pour piloter la pluralité de premiers éléments lumineux primaires, de préférence agencés circulairement, et/ou la pluralité de deuxièmes éléments lumineux primaires, de préférence agencés circulairement.

Avantageusement, l'unité de commande est agencée pour commander un allumage (i.e. un éclairage ou une activation) partiel ou total, d'un élément ou d'un groupe d'éléments parmi la pluralité de premiers éléments lumineux primaires, de préférence agencés circulairement, et/ou la pluralité de deuxièmes éléments lumineux primaires, de préférence agencés circulairement.

Avantageusement, l'unité de commande est agencée pour allumer un ou plusieurs groupes d'éléments représentant 5%, de préférence 10 % de la capacité totale de la source d'illumination primaire.

Ceci permet de piloter la source d'illumination primaire en fonction des besoins d'illuminations ou d'éclairage, et notamment une prise d'image optimale en évitant la sous-exposition ou la surexposition.

Avantageusement, la source d'illumination primaire et/ou la source d'illumination secondaire présentent une forme de panneau. La source d'illumination primaire est de préférence agencée circulairement.

De préférence, le panneau est un élément plan. Alternativement, le panneau peut être concave ou convexe ou encore conique.

Avantageusement, le dispositif de prise d'image comprend une portion supérieure, une portion inférieure et/ou au moins une portion latérale, et
dans lequel la source d'illumination primaire est agencée sur la portion supérieure, et la source d'illumination secondaire est agencée sur la portion supérieure, la portion inférieure et/ou l'au moins une portion latérale.

Ceci permet d'avoir un dispositif optimal pour l'utilisation faite par un opérateur, notamment en renforçant l'ergonomie d'utilisation et en réduisant au maximum la place occupée par le module dans les trois dimensions.

Notons qu'il est possible, à partir du contrôle individuel des LED ou éléments diffusifs des panneaux latéraux, d'obtenir un effet rasant, zénithal ou rétroéclairage.

Avantageusement, le dispositif comprend en outre un plateau tournant.

Avantageusement, la source d'illumination primaire comprend au moins un élément lumineux directif et la source d'illumination secondaire comprend au moins un élément lumineux diffusif.

Un deuxième aspect de la présente invention concerne un procédé pour identifier un défaut d'un composant horloger ou joaillier à l'aide du dispositif de prise d'image selon l'une des revendications précédentes, comprenant les étapes suivantes :
- fournir un composant horloger ou joaillier,
- illuminer le composant horloger ou joaillier en commandant la source d'illumination primaire du dispositif et/ou la source d'illumination secondaire du dispositif,
- prendre au moins un image du composant horloger ou joaillier avec le dispositif de prise d'image,
- détecter le défaut du composant horloger ou joaillier.

Ceci permet d'obtenir les avantages mentionnés ci-avant.

Avantageusement, le procédé comprend en outre l'étape suivante, avant l'étape de détection de défaut :
- commander successivement le premier élément lumineux primaire du dispositif et/ou le deuxième élément lumineux primaire du dispositif de sorte à modifier au moins partiellement une ombre et ou une réflexion de lumière du composant horloger ou joaillier, de préférence simultanément, ou en séquence avec, la pluralité d'éléments lumineux secondaires .

Ceci permet d'améliorer la détection de défaut.

Avantageusement, le procédé comprend en outre les étapes suivantes :
- prendre au moins une image, de préférence de multiples images,
- réaliser un traitement des images, comme un traitement mathématique et/ou un traitement par comparaison, par addition et/ou par soustraction d'image, ou un traitement des informations sur les défauts.

Avantageusement, le procédé comprend en outre l'étape suivante :
- envoyer une information concernant l'éventuel défaut détecté du composant horloger ou joaillier à un système automatique ou informatisé ou à un opérateur.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :
la figure 1 représente une vue en coupe schématique d'un dispositif de prise d'image d'un composant horloger ou joaillier selon un mode de réalisation de la présente invention,
la figure 2 représente une vue d'ensemble du dispositif de prise d'image du composant horloger ou joaillier selon un mode de réalisation de la présente invention,
la figure 3 représente une vue de détail dépliée d'éléments lumineux diffusifs du dispositif de prise d'image,
la figure 4 représente une vue de détail d'éléments lumineux directifs du dispositif de prise d'image,
la figure 5 représente un graphique d'intensité lumineuse en fonction de la longueur d'onde des éléments lumineux directifs,
la figure 6 représente un graphique d'intensité lumineuse en fonction de l'angle de radiation des éléments lumineux diffusifs,
la figure 7 représente un graphique d'intensité lumineuse en fonction de l'angle de radiation des éléments lumineux directifs,
la figure 8 représente un graphique fonctionnel du dispositif de prise d'image,
la figure 9 représente un premier élément lumineux primaire et un deuxième élément primaire du dispositif avec leur angle de rayonnement respectif,
la figure 10 représente un élément lumineux secondaire avec son angle de rayonnement secondaire.

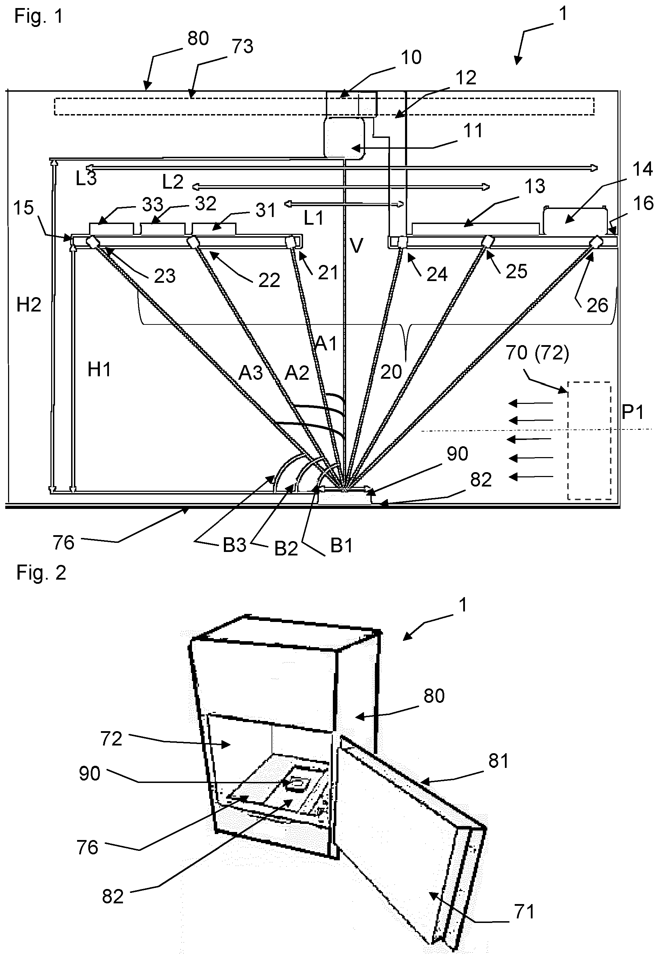

La figure 1 représente une vue en coupe schématique d'un dispositif de prise d'image 1. Le dispositif 1 permet la prise d'image(s) d'un composant horloger ou joaillier 90.

Le dispositif comprend :
- un appareil de prise d'image 10, tel qu'une caméra ou tout autre appareil permettant la prise d'image comme par exemple un appareil photo, définissant un axe optique principal de prise d'image V du composant horloger ou joaillier 90,
- une source d'illumination primaire 20 avec :
- au moins un premier élément lumineux primaire 21 définissant un premier angle d'inclinaison primaire A1 par rapport à l'axe optique principal V et un premier angle de rayonnement primaire 121, et
- optionnellement au moins un deuxième élément lumineux primaire 22 définissant un deuxième angle d'inclinaison primaire A2 par rapport à l'axe optique principal V et un deuxième angle de rayonnement primaire 122,
dans lequel le premier angle d'inclinaison primaire A1 est inférieur au deuxième angle d'inclinaison primaire A2 d'une première valeur prédéterminée.

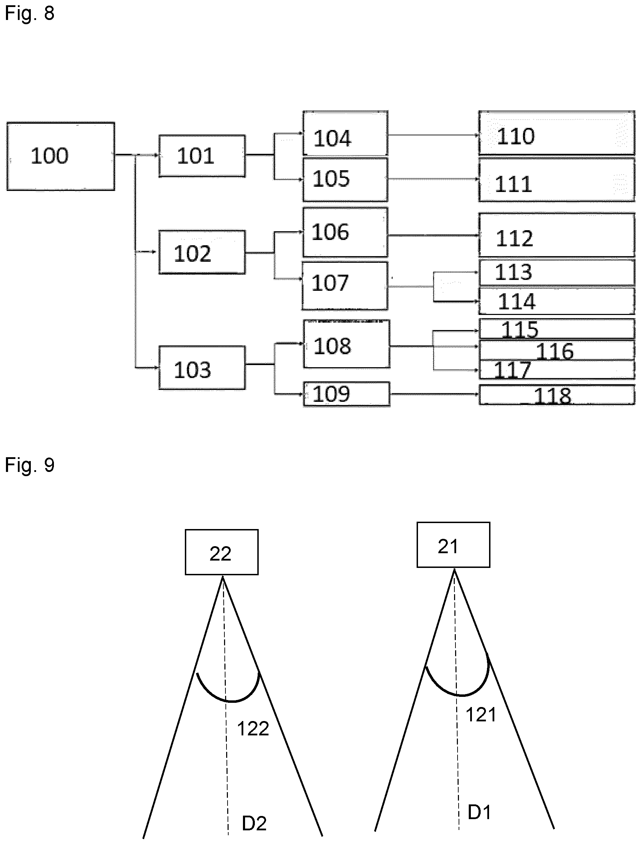

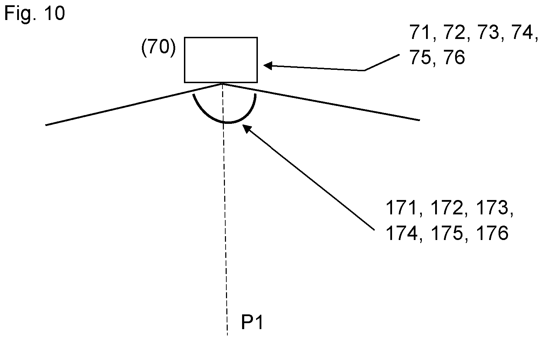

Notons que les angles d'inclinaison A1 et A2 sont de préférence définis de manière à ce que l'axe des cônes d'émission D1, D2 des éléments lumineux primaires 21, 22, soient orientés vers le composant 90 (i.e. D1 pointe vers le composant 90, de préférence vers un milieu du composant 90 ; D2 pointe vers le composant 90, de préférence vers le milieu du composant 90, en référence aux figures 9 et 10). Le cône d'émission est également appelé angle de rayonnement.

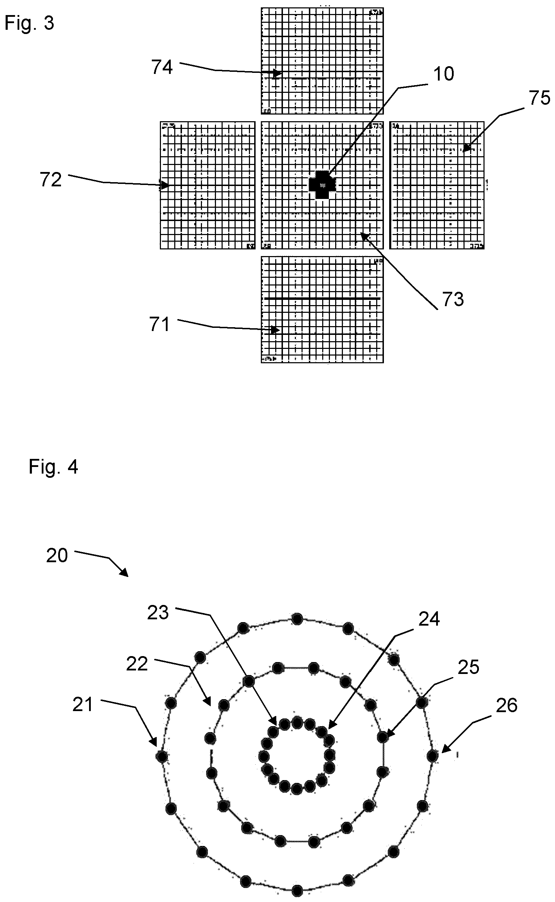

Il est possible de prévoir un troisième élément lumineux primaire 23 définissant un troisième angle d'inclinaison primaire A3 par rapport à l'axe optique principal V et un troisième angle de rayonnement primaire. De la même façon, il est possible de prévoir un quatrième élément lumineux primaire 24 définissant un quatrième angle d'inclinaison primaire par rapport à l'axe optique principal V et un quatrième angle de rayonnement primaire. De la même façon, il est possible de prévoir un cinquième élément lumineux primaire 25 définissant un cinquième angle d'inclinaison primaire par rapport à l'axe optique principal V et un cinquième angle de rayonnement primaire. De la même façon, il est possible de prévoir un sixième élément lumineux primaire 26 définissant un sixième angle d'inclinaison primaire par rapport à l'axe optique principal V et un sixième angle de rayonnement primaire. Ces éléments peuvent être disposés comme il sera détaillé en référence à la figure 4. Notons que les angles B1, B2, B3 sont les angles complémentaires des angles A1, A2, A3, respectivement, c'est-à-dire que leur somme est égale à 90 degrés. Notons en outre qu'il est possible de prévoir encore plus d'angles d'inclinaisons primaires, comme un septième angle d'inclinaison, un huitième angle d'inclinaison, un neuvième angle d'inclinaison, et ainsi de suite, avec leurs éléments structurels associés comme décrit ici.

Les éléments lumineux primaires 21, 22, 23, 24, 25, 26 sont également appelés éléments lumineux directifs 21, 22, 23, 24, 25, 26 (petit angle de diffusion). De préférence les éléments lumineux primaires sont fixes. Alternativement, il est possible de piloter chacune de leurs inclinaisons. Il est en outre possible de piloter un déplacement de ceux-ci comme par exemple une ou plusieurs translations.

Le dispositif 1 comprend en outre au moins une source d'illumination secondaire 70 avec :
- une pluralité d'éléments lumineux secondaires 71, 72, 73, 74, 75, 76 définissant au moins un angle principal d'inclinaison secondaire P1 par rapport à l'axe principal de prise d'image V et au moins un angle de rayonnement secondaire,
dans lequel l'au moins un angle principal d'inclinaison secondaire P1 est différent du premier angle d'inclinaison primaire A1 et du deuxième angle d'inclinaison primaire A2, et dans lequel l'au moins un angle de rayonnement secondaire est plus grand que le premier angle de rayonnement primaire et que le deuxième angle de rayonnement primaire. La pluralité d'éléments lumineux secondaires 71, 72, 73, 74, 75, 76 sont également appelés éléments lumineux diffusifs 71, 72, 73, 74, 75, 76 (grand angle de diffusion).

Le dispositif 1 comprend en outre une unité de commande agencée pour commander l'au moins un premier élément lumineux primaire 21, l'au moins un deuxième élément lumineux primaire 22 et la pluralité d'éléments lumineux secondaires 71, 72, 73, 74, 75, 76, de sorte à modifier au moins partiellement une ombre et/ou une lumière réfléchie du composant horloger ou joaillier 90 afin de permettre d'identifier l'éventuel défaut du composant horloger ou joaillier 90.

L'unité de commande est de préférence agencée pour piloter des pilotes d'élément lumineux primaire 31, 32, 33. Le pilote d'élément lumineux primaire 31 permet de piloter le premier élément lumineux primaire 21. Le pilote d'élément lumineux primaire 32 permet de piloter le deuxième élément lumineux primaire 22. Le pilote d'élément lumineux primaire 33 permet de piloter l'élément lumineux primaire 23. D'autres pilotes d'élément lumineux primaire permettent de piloter les éléments lumineux primaires 24, 25, 26.

Les éléments lumineux 21-26 peuvent être montés sur un support 15. Avantageusement, le support 15 peut comporter des structures de montage qui déterminent l'orientation des éléments lumineux 21-26.

Le dispositif 1 peut comprendre en outre un PCB (« printed circuit board » en anglais), c'est-à-dire un circuit imprimé 13. Le dispositif 1 peut comprendre en outre une unité de fourniture d'électricité ou de circuit de commande 14 (« power supply and command » en anglais). Le circuit imprimé 13 et/ou l'unité de fourniture 14 peuvent être montées sur un support 16.

Le dispositif 1 peut comprendre en outre une lentille 11, comme par exemple une lentille de focalisation, agencée pour coopérer avec l'appareil de prise d'image 10 de façon traditionnelle. Le dispositif 1 peut comprendre en outre des moyens de réglage 12, comme par exemple une vis micrométrique éventuellement commandée, afin de régler l'altitude de l'appareil de prise d'image 10.

Le dispositif 1 peut être installé dans une boîte 80, avec un plan inférieur 82.

Des dimensions sont données à titre d'illustration, sans être limité à ces valeurs : H1 = 260 mm, H2 = 318 mm, L1 = 60 mm, L2 = 188 mm, L3 = 298 mm.

Un exemple de caméra est caméra 26 Mpixels monochromatique avec objectif de la même résolution. Dans une variante, il est possible d'installer deux caméras. Ces caméras peuvent être avec une résolution de 10 Mpixels, couplées chacune à un objectif. L'objectif peut être à champ large pour grandes pièces type platines ou planches, et grand ponts ou à champ rapproché pour petites pièces types petits ponts, et peut être interchangé dans le système. Il est possible en outre d'utiliser un objectif avec une distance focale de 75 mm par exemple. On pourrait aussi utiliser une plage de distance focale d'entre 65 et 85 mm.

La caméra peut permettre de détecter une image à partir d'intensité lumineuse (caméra « normale » monochrome). Il est bien sûr possible d'utiliser une caméra couleur (par exemple dite RGB).

La figure 2 représente une vue d'ensemble du dispositif de prise d'image 1 du composant horloger ou joaillier 90 selon la présente invention.

Le composant horloger ou joaillier 90 peut être déposé sur un support du dispositif de prise d'image 1, de préférence au niveau du plan inférieur 82.

La pluralité d'éléments lumineux secondaires 71, 72, 73, 74, 75, 76 est agencée pour illuminer un intérieur du dispositif 1. Par exemple, l'élément lumineux secondaire 76 est positionné au niveau du plan inférieur 82 et illumine vers le haut du dispositif 1. L'élément lumineux secondaire 73 est positionné au niveau du plan supérieur de la boîte 80 et illumine vers le bas du dispositif 1. L'élément lumineux secondaire 72 est positionné sur un pan latéral du dispositif 1. Le dispositif 1 peut être équipé d'une porte d'accès 81 qui peut être elle-même fournie avec l'élément lumineux secondaire 71 sur sa portion intérieure. Il est possible d'avoir un seul ou plusieurs éléments lumineux secondaires 71, 72, 73, 74, 75, 76 et/ou de se passer d'un des panneaux suivant l'agencement de la boîte 80 (par exemple ne pas avoir de panneau inférieur 76). La porte d'accès 81 est de préférence équipée de fentes. Les fentes peuvent servir à l'ouverture ou l'accès, afin d'introduire la pièce sans ouvrir la porte. Les fentes peuvent servir en outre à permettre l'entrée et/ou la sortie du vérin décrit ci-après.

Le dispositif peut en outre comprendre un système automatisé avec un vérin sur lequel se trouve le posage spécifique à chaque type de pièce, le posage étant installé sur le support 82.

Le vérin peut être contrôlé par des moyens électriques ou pneumatiques et permet de réduire le risque d'introduction d'agents externes tels que des poussières ou fibres dans l'intérieur de la boîte 80.

Le dispositif peut en outre comprendre un plateau tournant, qui peut en particulier remplacer le vérin.

Le plateau tournant est agencé pour permettre l'introduction automatique de pièces et/ou le positionnement automatique de pièces, afin de modifier par exemple une position de la pièce à contrôler après introduction ou illumination.

La figure 3 représente une vue de détail dépliée d'éléments lumineux diffusifs 71, 72, 73, 74, 75, 76 du dispositif de prise d'image 1.

Les éléments lumineux diffusifs 71, 72, 73, 74, 75, 76 sont représentés dépliés.

Comme indiqué ci-avant, l'élément lumineux secondaire 73 est positionné au niveau du plan supérieur de la boîte 80, alors que le composant horloger ou joaillier 90 est sur le plan inférieur 82. L'élément lumineux secondaire 72 est positionné sur un pan latéral du dispositif 1, et l'élément lumineux secondaire 75 est disposé sur un autre pan latéral du dispositif 1, opposé à l'élément lumineux secondaire 72. L'élément lumineux secondaire 74 est positionné sur encore un autre pan latéral du dispositif 1, qui est de préférence perpendiculaire à l'élément lumineux secondaire 72. L'élément lumineux secondaire 71 est opposé à l'élément lumineux secondaire 74.

En d'autres termes, lorsqu'ils sont dans un état replié, les éléments lumineux diffusifs 71, 72, 73, 74, 75, 76 forment un parallélépipède, de préférence un cube, avec le premier élément lumineux primaire 21 (et/ou avec les autres éléments lumineux primaires 22, 23, 24, 25, 26) installé sur une face supérieure du parallélépipède. Dans un mode de réalisation alternatif, lorsqu'ils sont dans un état replié, les éléments lumineux diffusifs 71, 72, 73, 74, 75, 76 forment un cylindre, un tube ou un dôme.

Les éléments lumineux diffusifs 71, 72, 73, 74, 75, 76 sont par exemple des LED. Avantageusement, les LEDs peuvent être recouverts par des panneaux diffusifs. Dans un autre mode de réalisation, les éléments diffusifs sont formés par des écrans, en particulier des écrans à cristaux liquides.

Les éléments lumineux diffusifs 71, 72, 73, 74, 75, 76 peuvent comprendre différentes couleurs d'émission de lumières chacun, ou être chacun choisis pour une seule couleur. Des exemples de longueurs d'ondes (définissant des couleurs de façon classique) choisis sont listées dans le tableau 1 ci-dessous.

**Tableau 1**

| Nom | Code | Longueur d'onde λd min (nm) | Longueur d'onde λd max (nm) |
|---|---|---|---|
| jaune | YL1 | 585 | 590 |
| | YL2 | 590 | 595 |
| rouge | HR1 | 615 | 620 |
| | HR2 | 620 | 625 |
| bleu | BL5 | 460 | 465 |
| | BL6 | 465 | 470 |
| vert | PG2 | 515 | 520 |
| | PG3 | 520 | 525 |
| | PG4 | 525 | 530 |

Dans un mode de réalisation particulier, chaque élément lumineux diffusif 71, 72, 73, 74, 75, 76 est composé de 1332 LED diffusives contrôlables dans une plage de 4093 niveaux d'intensité. La disposition des LED diffusives dans recouvre de préférence plus de 70%, plus de 80% ou plus de 90 % de la surface intérieure de la boite rectangulaire 80. Dans un autre mode de réalisation, les panneaux latéraux ont 252 LED chacun et les panneaux supérieur ou inférieur ont 312 LED chacun.

La figure 4 représente une vue de détail d'éléments lumineux directifs 21, 22, 23, 24, 25, 26 du dispositif de prise d'image 1.

Les éléments lumineux directifs 21, 22, 23, 24, 25, 26 sont de préférence agencés sur une série de trois cercles concentriques, comme illustrés en figure 4. Comme indiqué, on pourrait utiliser un autre nombre de cercles, comme par exemple entre 1 et 10, sans être limité à ces exemples. Il est possible de prévoir aussi des ellipses ou des cercles non concentriques.

Les éléments lumineux directifs 21, 22, 23, 24, 25, 26 sont par exemple des LED.. Dans un autre mode de réalisation, les éléments directifs sont formés par des écrans, en particulier des écrans à cristaux liquides.

Dans un mode de réalisation avantageux, le dispositif 1 comprend 48 LED directives divisés en 3 cercles de 16 LED chacun, inclinées en direction de la pièce. Chaque cercle a un diamètre différent.

Il est possible de contrôler individuellement chaque élément lumineux directif 21, 22, 23, 24, 25, 26, ou collectivement, ou par sousgroupe (par exemple chaque cercle), que ce soit pour son intensité lumineuse (ON, OFF ou avec un variateur, « dimmer » en anglais), pour son angle d'inclinaison et/ou pour son angle de rayonnement.

On réalise alors un dôme lumineux illuminant le composant horloger ou joaillier 90 grâce aux éléments lumineux directifs et/ou diffusifs.

La figure 5 représente un graphique d'intensité lumineuse en fonction de la longueur d'onde des éléments lumineux directifs 21, 22, 23, 24, 25, 26.

Les éléments lumineux directifs 21, 22, 23, 24, 25, 26 émettent de préférence à 440 nm ou 450 nm ou 460 nm, correspondant aux couleurs violet ou bleu ou blanc.

La figure 6 représente un graphique d'intensité lumineuse en fonction de l'angle de radiation des éléments lumineux diffusifs 71, 72, 73, 74, 75, 76. De préférence, les éléments lumineux diffusifs sont fixes (ou fixés à leurs parois).

Les éléments lumineux diffusifs 71, 72, 73, 74, 75, 76 présentent une intensité lumineuse répartie sur un large cône de diffusion, comme il est visible sur le graphique avec la valeur d'intensité en fonction de l'angle de diffusion de 0 à 90 degrés.

Les éléments lumineux diffusifs 71, 72, 73, 74, 75, 76 (ou secondaires) présentent chacun un angle de rayonnement secondaire 171, 172, 173, 174, 175, 176 (en référence à la figure 10). C'est angle est préférentiellement entre 0 et 180 degrés.

La figure 7 représente un graphique d'intensité lumineuse en fonction de l'angle de radiation des éléments lumineux directifs 21, 22, 23, 24, 25, 26.

Les éléments lumineux directifs 21, 22, 23, 24, 25, 26 présentent une intensité lumineuse répartie sur un cône de diffusion resserré, comme il est visible sur le graphique avec la valeur d'intensité en fonction de l'angle de diffusion de 0 à 90 degrés, avec 50 % de la puissance répartie de 0 à +/- 20 degrés.

Les éléments lumineux directifs 21, 22, 23, 24, 25, 26 (ou primaires) présentent chacun un angle de rayonnement primaire. C'est angle est préférentiellement de 20.

Dans un mode de réalisation, le premier angle de rayonnement primaire 121 (en référence à la figure 9) est de préférence de 15 degrés, le deuxième angle de rayonnement primaire 122 est de préférence de 20 degrés, le troisième angle de rayonnement primaire est de préférence de 25 degrés.

La figure 8 représente un graphique fonctionnel du dispositif de prise d'image.

Le procédé pour identifier un défaut du composant horloger ou joaillier 90 à l'aide du dispositif de prise d'image 1 présenté ci-avant, comprend les étapes suivantes :
- fournir un composant horloger ou joaillier 90,
- illuminer le composant horloger ou joaillier 90 en commandant la source d'illumination primaire du dispositif 20 et/ou la source d'illumination secondaire du dispositif 70,
- prendre au moins un image du composant horloger ou joaillier 90 avec le dispositif de prise d'image 1,
- détecter le défaut du composant horloger ou joaillier 90.

En outre, le procédé peut comprendre l'étape suivante, avant l'étape de détection de défaut :
- commander successivement le premier élément lumineux primaire 21, 22, 23, 24, 25, 26 du dispositif 1 et/ou le deuxième élément lumineux primaire 71, 72, 73, 74, 75, 76 du dispositif 1 de sorte à modifier au moins partiellement une ombre et ou une réflexion de lumière du composant horloger ou joaillier 90.

A l'étape 100, le procédé concerne la mise en évidence ou en valeur des anomalies des composants horlogers ou joailliers 90 sur des images.

A l'étape 101, le procédé comprend l'étape consistant à charger ou décharger les composants horlogers ou joailliers 90.

A l'étape 102, le procédé comprend l'étape consistant à éclairer ou illuminer le ou les composants horlogers ou joailliers 90.

A l'étape 103, le procédé comprend l'étape consistant à prendre une ou des images du ou des composants horlogers ou joailliers 90.

A l'étape 104, le procédé comprend l'étape consistant à ouvrir ou fermer le système de chargement (par exemple ouvrir ou fermer la porte 81).

A l'étape 105, le procédé comprend l'étape consistant à installer ou aligner ou positionner correctement le ou les composants horlogers ou joailliers 90.

A l'étape 106, le procédé comprend l'étape consistant à illuminer le ou les composants horlogers ou joailliers 90 en maximisant la dynamique de la région défectueuse. L'idée est de maximiser le contraste (négatif ou positif) entre l'anomalie et la partie normale de la pièce à contrôler, grâce aux LED directifs adressables (de préférence disposés en trois cercles concentriques). Ce type d'illumination permet de créer des images avec des contrastes élevés facilitant la détection. En d'autres termes, on essaie d'arriver aux limites min et max 0 et 255 de l'image mais d'avoir le minimum de pixels possibles à ces limites.

A l'étape 107, le procédé comprend l'étape consistant à illuminer le ou les composants horlogers ou joailliers 90 en limitant la saturation du capteur pour les surfaces réfléchissantes. L'idée est de réduire le bruit sur les images et d'obtenir une visibilité nette grâce aux LED diffusives, mais en limitant l'intensité lumineuse des LED.

A l'étape 108, le procédé comprend l'étape consistant à obtenir une image de qualité bonne ou correcte en termes de résolution, champ de vision, exposition ou netteté.

A l'étape 109, le procédé comprend l'étape consistant à acquérir l'image(s).

A l'étape 110, le procédé comprend l'étape consistant à actionner les actionneurs pour positionner le ou les composants horlogers ou joailliers 90 (comme par exemple vérin de positionnement du support 82).

A l'étape 111, le procédé comprend l'étape consistant à positionner le ou les composants horlogers ou joailliers 90 dans un moule agencé pour le ou les recevoir.

A l'étape 112, le procédé comprend l'étape consistant à illuminer le ou les composants horlogers ou joailliers 90 en commandant la source d'illumination primaire 20 du dispositif 1.

A l'étape 113, le procédé comprend l'étape consistant à illuminer le ou les composants horlogers ou joailliers 90 en commandant la source d'illumination secondaire 70.

A l'étape 114, le procédé peut comprendre l'étape consistant à fournir des plaques diffusives additionnelles devant la source d'illumination secondaire 70, de sorte à augmenter la diffusion de la source d'illumination secondaire 70.

A l'étape 115, le procédé comprend l'étape consistant à faire fonctionner l'appareil de prise d'image 10, tel qu'une caméra 10.

A l'étape 116, le procédé comprend l'étape consistant à faire fournir un objectif optique, par exemple un objectif de 75 mm, devant l'appareil de prise d'image 10.

A l'étape 117, le procédé comprend l'étape consistant à actionner les moyens de réglage 12, comme par exemple une vis micrométrique éventuellement commandée, afin de régler l'altitude de l'appareil de prise d'image 10.

A l'étape 118, le procédé comprend l'étape consistant à faire fonctionner le dispositif 1 afin de permettre d'identifier l'éventuel défaut du composant horloger ou joaillier 90.

Enfin, il est possible de prévoir un logiciel, ou un réseau de neurones entraîné, pour choisir parmi les nombreuses combinaisons d'illuminations des éléments lumineux primaires et secondes, contrôlables individuellement ou par groupes, afin d'obtenir le minimum de combinaisons optimales pour révéler les défauts sur un type de pièce spécifique.

Par exemple, il est possible de prévoir en entrée le nom d'un composant horloger ou joaillier 90 à inspecter, et en sortie, le schéma d'illuminations de chaque élément lumineux primaire ou secondaire, avec son intensité, sa couleur, son angle de rayonnement et son angle d'inclinaison, y compris leur évolution temporelle (par exemple, plusieurs séries d'illuminations). Ceci permet d'optimiser la modification de l'ombre et/ou de la lumière réfléchie afin d'identifier le défaut éventuel sur le composant horloger ou joaillier 90.

En outre, il est possible de prévoir plusieurs prises d'images et que l'ensemble des images soit ensuite réuni en une seule par superposition ou apprentissage pour avoir l'ensemble des données sur une seule image.

Il est possible de prévoir un apprentissage par optimisation successive (manuellement) ou par machine learning (apprentissage machine), jusqu'à 50%, de préférence jusqu'à 80%, de préférence jusqu'à 90% d'information relative à la visibilité du défaut.

Il est en outre possible de prévoir une stratégie de détection de défaut, un ordre d'illumination, une ou plusieurs séquences d'illumination, un accrochage d'un défaut prioritaire puis détection d'autres défauts secondaires.

Il est possible en outre de prévoir une mesure dimensionnelle, de couleur ou une détection de présence avec la présente invention.

Il est possible en outre de prévoir une illumination par UV. Ceci est particulièrement intéressant en cas de lubrification fluorescente et/ou pour la visibilité potentielle de poussière.

La figure 9 représente le premier élément lumineux primaire 21 avec son angle de rayonnement 121 (ou cône de rayonnement) et le deuxième élément primaire 22 avec son angle de rayonnement (ou cône de rayonnement 122). Il en est de même pour les éléments lumineux 23, 24, 25, 26 etc. Comme il est visible à la figure 9, le cône est plutôt étroit, l'élément lumineux est directif. Les cônes de rayonnement présentent chacun un axe D1, D2, ce qui représente une direction d'éclairage pour chaque élément lumineux.

La figure 10 représente l'élément lumineux secondaire 71 avec son angle de rayonnement secondaire (ou cône de rayonnement) 171. Il en est de même pour les éléments lumineux 72, 73, 74, 75, 76 avec leur angle de rayonnement 172, 173, 174, 175, 176 respectif. Comme il est visible à la figure 10, le cône est plutôt large, l'élément lumineux est diffusif. L'angle principal d'inclinaison secondaire P1 est indiqué également sur la figure 10. Il est entendu qu'il existe un angle principal d'inclinaison secondaire par élément lumineux secondaire, comme il ressort de la figure 2.

On comprendra que diverses modifications et/ou améliorations évidentes pour l'homme du métier peuvent être apportées aux différents modes de réalisation de l'invention décrits dans la présente description.

Notons enfin qu'il est possible de combiner les modes de réalisations autant que possible ou nécessaire.

## Revendications

1. Dispositif de prise d'image (1) d'un composant horloger ou joaillier (90) pour identifier un éventuel défaut du composant horloger ou joaillier (90), comprenant :
- un appareil de prise d'image (10), tel qu'une caméra, définissant un axe optique principal (V) de prise d'image du composant horloger ou joaillier (90),
- une source d'illumination primaire (20) avec :
- au moins un premier élément lumineux primaire (21) définissant un premier angle d'inclinaison primaire (A1) par rapport à l'axe optique principal (V) et un premier angle de rayonnement primaire (121), et
- au moins une source d'illumination secondaire (70) avec :
- une pluralité d'éléments lumineux secondaires (71, 72, 73, 74, 75, 76) définissant au moins un angle principal d'inclinaison secondaire (P1) par rapport à l'axe principal (V) de prise d'image et au moins un angle de rayonnement secondaire (171, 172, 173, 174, 175, 176),
dans lequel l'au moins un angle principal d'inclinaison secondaire (P1) est différent du premier angle d'inclinaison primaire (A1), et dans lequel l'au moins un angle de rayonnement secondaire (171, 172, 173, 174, 175, 176) est plus grand que le premier angle de rayonnement primaire (121),
- une unité de commande agencée pour commander l'au moins un premier élément lumineux primaire (21)et/ou la pluralité d'éléments lumineux secondaires (71, 72, 73, 74, 75, 76), de sorte à modifier au moins partiellement une ombre et/ou une lumière réfléchie du composant horloger ou joaillier (90) afin de permettre d'identifier l'éventuel défaut du composant horloger ou joaillier (90).

2. Dispositif de prise d'image (1) selon la revendication précédente, comprenant en outre :
- au moins un deuxième élément lumineux primaire (22) définissant un deuxième angle d'inclinaison primaire (A2) par rapport à l'axe optique principal (V) et un deuxième angle de rayonnement primaire (122), et
dans lequel le premier angle d'inclinaison primaire (A1) est inférieur au deuxième angle d'inclinaison primaire (A2) d'une première valeur prédéterminée.

3. Dispositif de prise d'image (1) selon l'une des revendications précédentes, dans lequel l'unité de commande est agencée pour commander une intensité lumineuse de l'au moins un premier élément lumineux primaire (21), l'au moins un deuxième élément lumineux primaire (22) et/ou la pluralité d'éléments lumineux secondaires (71, 72, 73, 74, 75, 76).

4. Dispositif de prise d'image (1) selon l'une des revendications précédentes, dans lequel l'unité de commande est agencée pour commander une inclinaison de l'au moins un premier élément lumineux primaire (21), de l'au moins un deuxième élément lumineux primaire (22) et/ou de la pluralité d'éléments lumineux secondaires (71, 72, 73, 74, 75, 76), et de préférence l'inclinaison de la pluralité d'éléments lumineux secondaires (71, 72, 73, 74, 75, 76) est prédéterminée et/ou fixe.

5. Dispositif de prise d'image (1) selon l'une des revendications précédentes, dans lequel l'unité de commande est agencée pour commander une valeur du premier angle de rayonnement primaire (121), du deuxième angle de rayonnement primaire (122) et/ou de l'angle de rayonnement secondaire (171, 172, 173, 174, 175, 176).

6. Dispositif de prise d'image (1) selon l'une des revendications précédentes, dans lequel l'unité de commande est agencée pour commander une séquence d'illumination de l'au moins un premier élément lumineux primaire (21), et/ou de l'au moins un deuxième élément lumineux primaire (22) et/ou de la pluralité d'éléments lumineux secondaires (71, 72, 73, 74, 75, 76) et/ou d'un ou plusieurs éléments lumineux de la pluralité d'éléments lumineux secondaires (71, 72, 73, 74, 75, 76).

7. Dispositif de prise d'image (1) selon l'une des revendications précédentes, dans lequel la source d'illumination primaire (20) comprend :
- une pluralité de premiers éléments lumineux primaires (21), de préférence agencés circulairement,
- une pluralité de deuxièmes éléments lumineux primaires (22), de préférence agencés circulairement.

8. Dispositif de prise d'image (1) selon l'une des revendications précédentes, dans lequel la source d'illumination primaire (20) et/ou la source d'illumination secondaire (70) présentent une forme de panneau.

9. Dispositif de prise d'image (1) selon l'une des revendications précédentes, dans lequel le dispositif de prise d'image (1) comprend une portion supérieure, une portion inférieure et/ou au moins une portion latérale, et
dans lequel la source d'illumination primaire (20) est agencée sur la portion supérieure, et la source d'illumination secondaire (70) est agencée sur la portion supérieure, la portion inférieure et/ou l'au moins une portion latérale.

10. Dispositif de prise d'image (1) selon l'une des revendications précédentes, comprenant en outre un plateau tournant.

11. Dispositif de prise d'image (1) selon l'une des revendications précédentes, dans lequel la source d'illumination primaire (20) comprend au moins un élément lumineux directif (21, 22, 23, 24, 25, 26) et la source d'illumination secondaire (70) comprend au moins un élément lumineux diffusif (71, 72, 73, 74, 75, 76).

12. Procédé pour identifier un défaut d'un composant horloger ou joaillier (90) à l'aide du dispositif de prise d'image (1) selon l'une des revendications précédentes, comprenant les étapes suivantes :
- fournir un composant horloger ou joaillier (90),
- illuminer le composant horloger ou joaillier (90) en commandant la source d'illumination primaire (20) du dispositif (1) et/ou la source d'illumination secondaire (70) du dispositif (1),
- prendre au moins un image du composant horloger ou joaillier (90) avec le dispositif de prise d'image (1),
- détecter le défaut du composant horloger ou joaillier (90).

13. Procédé selon la revendication précédente, comprenant en outre l'étape suivante, avant l'étape de détection de défaut :
- commander successivement le premier élément lumineux primaire (21) du dispositif (1) et/ou le deuxième élément lumineux primaire (22) du dispositif (1) de sorte à modifier au moins partiellement une ombre et ou une réflexion de lumière du composant horloger ou joaillier (90).

14. Procédé selon la revendication 12 ou 13, comprenant en outre les étapes suivantes :
- prendre au moins une image, de préférence de multiples images,
- réaliser un traitement des images, comme un traitement mathématique et/ou un traitement par comparaison, par addition et/ou par soustraction d'image.

15. Procédé selon l'une des revendications 12 à 14, comprenant en outre l'étape suivante :
- envoyer une information concernant l'éventuel défaut détecté du composant horloger ou joaillier (90) à un système automatique ou à un opérateur.
